# EUROPÄISCHE PATENTANMELDUNG

(11) **EP 4 686 832 A1**
(43) Veröffentlichungstag der Anmeldung: **04.02.2026**
(21) Anmeldenummer: 24192126.1
(22) Anmeldetag: 31.07.2024
(51) Int. Cl.: F04D 19/00, F04D 25/08, F04D 29/54, H02K 5/24

(54) **MOTORTRÄGER FÜR EINEN VENTILATOR**

(71) Anmelder: Viessmann Holding International GmbH, 35108 Allendorf (Eder) (DE)
(72) Erfinder: SCHUBERT, Andreas, 35088 Battenberg (DE); BAMBERGER, Konrad, 35232 Dautphetal (DE)
(74) Vertreter: Clerc, Natalia

(57) **Zusammenfassung**

Ein Motorträger für einen Ventilator weist einen äusseren Trägerteil (1), einen inneren Trägerteil (3) zur Halterung eines Motors (5), Streben (4), die den äusseren Trägerteil (1) mit dem inneren Trägerteil (3) verbinden, und eine Luftdurchströmungsöffnung (7) auf, die eine Achse (L) definiert. Der innere Trägerteil (3) ist in der Luftdurchströmungsöffnung (7) angeordnet. Die Streben (4) unterteilen die Luftdurchströmungsöffnung (7). Je ein erstes Ende (40) der Streben (4) ist am äusseren Trägerteil (1) und je ein zweites Ende (43) der Streben (4) ist am inneren Trägerteil (3) angeordnet. Die Streben (4) sind in einer Ebene senkrecht zur Achse (L) gebogen ausgebildet. Die Streben (4) kreuzen sich. Der erfindungsgemässe Motorträger weist eine hohe Torsionssteifigkeit bei maximiertem Durchflussquerschnitt auf.

## Beschreibung

### TECHNISCHES GEBIET

Die vorliegende Erfindung betrifft einen Motorträger für einen Ventilator, bevorzugt für einen Axialventilator, insbesondere für einen Ventilator einer Wärmepumpe, beispielsweise für eine Luft-Wasser-Wärmepumpe.

### STAND DER TECHNIK

Ventilatoren benötigen einen Motorträger, um eine mechanische Verbindung zwischen Antriebsmotor und Ventilatorgehäuse herzustellen. Diese Motorträger müssen einerseits möglichst steif sein. Andererseits müssen sie eine möglichst grosse Luftdurchströmungsöffnung und somit möglichst wenig Material im Strömungsquerschnitt aufweisen. Auch aus Kostengründen ist eine Minimierung des Materials bevorzugt.

US 6 494 430 B2 offenbart einen Motorträger mit radialen Streben und mit schräg zu den radialen Streben verlaufenden, geradlinigen Streben, die jeweils zwei nebeneinander angeordnete radiale Streben verbinden.

EP 3 486 499 B1 beschreibt ein Kühlerlüftermodul mit parabelförmigen bzw. sichelförmigen Streben und mit Verstärkungen, welche die Verbindung zwischen einem Motorträger und einer der Streben verstärken. Die Streben und die den Streben zugeordneten Flügelelemente sind entweder vorwärtsgesichelt oder rückwärtsgesichelt.

EP 2 904 274 B1 zeigt ein Gehäuse für einen Ventilator mit radialen Streben, die in axialer Richtung gebogen sind.

EP 2 559 905 B1 verwendet koaxial zueinander liegende Gitterringe, die mit radial verlaufenden Streben miteinander verbunden sind.

### DARSTELLUNG DER ERFINDUNG

Es ist eine Aufgabe der Erfindung, einen Motorträger für einen Ventilator zu schaffen, wobei der Motorträger eine hohe Steifigkeit bei geringer Materialmenge aufweist.

Diese Aufgabe löst ein Motorträger mit den Merkmalen des Patentanspruchs 1.

Der erfindungsgemässe Motorträger weist auf
einen äusseren Trägerteil,
einen inneren Trägerteil zur Halterung eines Motors,
Streben, die den äusseren Trägerteil mit dem inneren Trägerteil verbinden und
eine Luftdurchströmungsöffnung, die eine Achse definiert.

Der innere Trägerteil ist in der Luftdurchströmungsöffnung angeordnet. Die Streben unterteilen die Luftströmungsöffnung. Je ein erstes Ende der Streben ist am äusseren Trägerteil und je ein zweites Ende der Streben ist am inneren Trägerteil angeordnet. Die Streben sind in einer Ebene senkrecht zur Achse gebogen ausgebildet. Die Streben kreuzen sich.

Dadurch, dass die Streben nicht radial verlaufen, sondern ihr Verlauf auch eine Komponente in Umfangsrichtung der Luftdurchströmungsöffnung bzw. des Motorträgers, d.h. eine umfängliche Komponente, aufweist, ist die Torsionssteifigkeit erhöht. Das Kreuzen der Streben erhöht die Torsionssteifigkeit zusätzlich.

Dank dieser Ausbildung und Anordnung der Streben lässt sich der Materialbedarf minimieren. Der Luftstrom wird dadurch weniger beeinträchtigt. Zudem ist der Motorträger dadurch leichter.

Die Ausbildung und Anordnung der Streben maximiert den freien Querschnitt der Luftdurchströmungsöffnung bzw. minimiert die Überdeckung der Luftdurchströmungsöffnung des Ventilators durch den Motorträger. Es lassen sich beispielsweise Motorträger schaffen, die den Querschnitt der Luftdurchströmungsöffnung mit weniger als 10%, vorzugsweise weniger als 9%, am bevorzugtesten mit ca. 8.275 %, der Querschnittsfläche überdecken.

Die erfindungsgemässe Anordnung optimiert das Strömungsverhalten und verringert die Geräuschentwicklung. Die Strömungsakustik, d.h. die Aeroakustik, ist dank der Ausbildung und Anordnung der Streben optimiert.

Der innere Trägerteil und die Luftdurchströmungsöffnung und/oder der innere Trägerteil sind vorzugsweise koaxial angeordnet.

Vorzugsweise sind die Streben in Strömungsrichtung eingangsseitig angeordnet, so dass sie das ausgangsseitige Strömungsverhalten kaum beeinflussen.

Der Begriff "Strömungsrichtung" bezeichnet eine Hauptströmungsrichtung durch den Motorträger und somit die Hauptströmungsrichtung durch den Ventilator. Die Hauptströmungsrichtung verläuft vorzugsweise in Richtung der Achse.

"Ventilator" bezeichnet Vorrichtungen, die einen Luftstrom mittels eines motorbetriebenen Flügelrads, auch Laufrad genannt, oder ähnlichen mittels eines Motors bewegbaren Luftleitelementen durch eine Luftdurchgangsöffnung erzeugen oder fördern.

Vorzugsweise sind alle Streben, die den inneren Trägerteil mit dem äusseren Trägerteil verbinden und die den inneren Trägerteil im bzw. am äusseren Trägerteil halten, gebogen ausgebildet. In anderen Ausführungsformen sind zusätzlich auch anders geformte Streben vorhanden, oder Streben, die mit ihren Enden nicht wie oben angegeben, an beiden Trägerteilen enden.

Vorzugsweise sind alle Streben, die den inneren Trägerteil mit dem äusseren Trägerteil verbinden und die den inneren Trägerteil im bzw. am äusseren Trägerteil halten, sich kreuzend ausgebildet. In anderen Ausführungsformen kreuzen sich nicht alle diese Streben. Vorzugsweise kreuzen sich mehr als 50% und noch bevorzugter mindestens 80% der Streben.

Die gebogenen Streben kreuzen sich vorzugsweise nicht nur mit einer Strebe, sondern mit mindestens zwei, noch bevorzugter mit genau zwei, anderen der Streben. Vorzugsweise sind alle sich kreuzenden Stege gebogene Stege. Dies erhöht die Stabilität und Torsionssteifigkeit.

Vorzugsweise weisen die Streben mindestens an ihren gegenseitigen Kreuzungen keine Knickstellen oder Stufen auf. Vorzugsweise ist ihr Verlauf über ihre gesamte Länge stetig, evtl. mit Ausnahme ihrer Endbereiche. Aufgrund der Kreuzungen, insbesondere bei einer gemeinsamen einteiligen Ausbildung aller Streben, entstehen üblicherweise Winkel und Ecken.

Vorzugsweise weisen alle Streben dieselbe Länge, Breite und Höhe auf.

In bevorzugten Ausführungsformen ist ein erster Teil der gebogenen Streben in eine erste Richtung gebogen und ein zweiter Teil der gebogenen Streben ist in eine der ersten Richtung entgegengesetzten Richtung gebogen. D.h. die Streben weisen unterschiedliche Biegungsrichtungen auf. Vorzugsweise ist der Biegeradius bei beiden Biegetypen gleich gross.

Vorzugsweise weisen alle Streben, die in die gleiche Richtung gebogen sind, denselben Biegeradius auf. Vorzugsweise sind die Biegeradien mit Ausnahme der Endbereiche stetig, d.h. sie weisen keine Knickstellen oder Stufen auf.

In bevorzugten Ausführungsformen sind die in der ersten Richtung gebogenen Streben und die in der zweiten Richtung gebogenen Streben in der Reihenfolge abwechselnd am äusseren Tragerteil und am inneren Trägerteil angeordnet. Vorzugsweise kreuzt eine in der ersten Richtung gebogene Strebe mindestens eine in der zweiten Richtung gebogene Strebe. Dies erhöht die Torsionssteifigkeit.

Vorzugsweise kreuzt eine in der ersten Richtung gebogene Strebe mindestens zwei vorzugsweise genau zwei, in der zweiten Richtung gebogene Streben. Dies erhöht die Torsionssteifigkeit noch mehr, bei gleichem Materialbedarf für die Streben.

In einer bevorzugten Ausführungsform bildet je eine in die erste Richtung gebogene Strebe mit je einer in die zweite Richtung gebogene Strebe ein Paar, wobei diese zwei Streben mit ihren zweiten Enden benachbart zueinander oder aneinander angrenzend am inneren Trägerteil angeordnet sind. Vorzugsweise bilden diese zwei Streben gemeinsam eine V-Form mit nach aussen gebogenen Schenkeln.

In bevorzugten Ausführungsformen sind mehrere identische V-Formen bildende Paare der Streben derart um den inneren Trägerteil angeordnet, dass sie sich benachbart zum äusseren Trägerteil überschneiden und eine blumenähnliche Form bilden.

Vorzugsweise sind die ersten Enden der Streben in einem Abstand zueinander am äusseren Trägerteil angeordnet. Vorzugsweise ist der Abstand zwischen dem ersten Ende jeder Strebe zum ersten Ende der auf einer ersten Seite benachbarten Strebe kleiner ist als der Abstand zwischen dem ersten Ende dieser Strebe zum ersten Ende der auf einer zweiten Seite benachbarten Strebe.

Diese Anordnungen ermöglichen grosse Winkel in den Kreuzungsbereichen und in den Endbereichen der einzelnen Streben in Bezug auf den inneren und den äusseren Trägerteil. Dies erhöht die Stabilität sowie die Steifigkeit. Zudem wird der Strömungswiderstand verringert.

Die Streben lassen sich in ihrer Dimension senkrecht zur Strömungsrichtung sehr schmal ausbilden, so dass sie den Strömungsquerschnitt nur minimal verringern. Um eine genügende Stabilität und Steifigkeit in axialer Richtung zu gewährleisten, sind sie in Strömungsrichtung breiter, vorzugsweise um ein Vielfaches breiter, ausgebildet als senkrecht zur Strömungsrichtung.

Der innere Trägerteil lässt sich unterschiedlich ausbilden. Er dient der Halterung, insbesondere der Lagerung des Motors, der vorzugsweise mit einem Laufrad, auch Flügelrad genannt, oder einem anderen Bauteil mit drehbaren Schaufeln oder Flügelelementen verbunden ist. In bevorzugten Ausführungsformen weist der innere Trägerteil ein kuppelförmiges Motorgehäuse auf, an dem die zweiten Enden der Streben angeordnet sind und das zur mindestens teilweisen Aufnahme des Motors ausgebildet ist.

Die einzelnen Komponenten des Motorträgers lassen sich als Einzelteile ausbilden und miteinander verbinden. In diesem Fall durchdringen die Streben einander vorzugsweise an in den Kreuzungsbereichen. In bevorzugten Ausführungsformen sind jedoch mindestens die Streben gemeinsam einteilig ausgebildet. Vorzugsweise sind alle Streben gemeinsam einteilig ausgebildet. In noch bevorzugteren Ausführungsformen ist sind der äussere Trägerteil, der innere Trägerteil und die Streben gemeinsam einteilig ausgebildet. Vorzugsweise besteht der Motorträger ausschliesslich aus diesen Bauteilen. Vorzugsweise sind diese Komponenten aus Kunststoff gebildet. Sie lassen sich beispielsweise gemeinsam einteilig mittels Spritzgussverfahren herstellen.

In bevorzugten Ausführungsformen ist eine Düse vorhanden, die mittelbar oder unmittelbar am Motorträger angeordnet ist. Vorzugsweise umschliesst die Düse das Laufrad, wobei das Laufrad vorzugsweise mindestens teilweise in der Düse aufgenommen ist.

Der erfindungsgemässe Motorträger ist vorzugsweise Teil eines Ventilators, d.h. einer Vorrichtung zur Erzeugung und/oder Förderung eines Luftstroms. Vorzugsweise ist der Ventilator ein Axialventilator, auch Axiallüfter genannt.

Der erfindungsgemässe Motorträger zeichnet sich durch eine hohe Torsionssteifigkeit bei geringer Materialmenge, insbesondere der Streben, aus.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines Ventilators mit einem erfindungsgemässen Motorträger, einem im Motorträger befestigtem Motor, einem Flügelrad und einer Düse;
- Figur 2: eine Ansicht des Ventilators gemäss Figur 1 von oben;
- Figur 3: einen Querschnitt durch den Ventilator entlang A-A gemäss Figur 2 und
- Figur 4: eine Ansicht des Ventilators gemäss Figur 1 von unten.

### BESCHREIBUNG BEVORZUGTER AUSFÜHRUNGSFORMEN

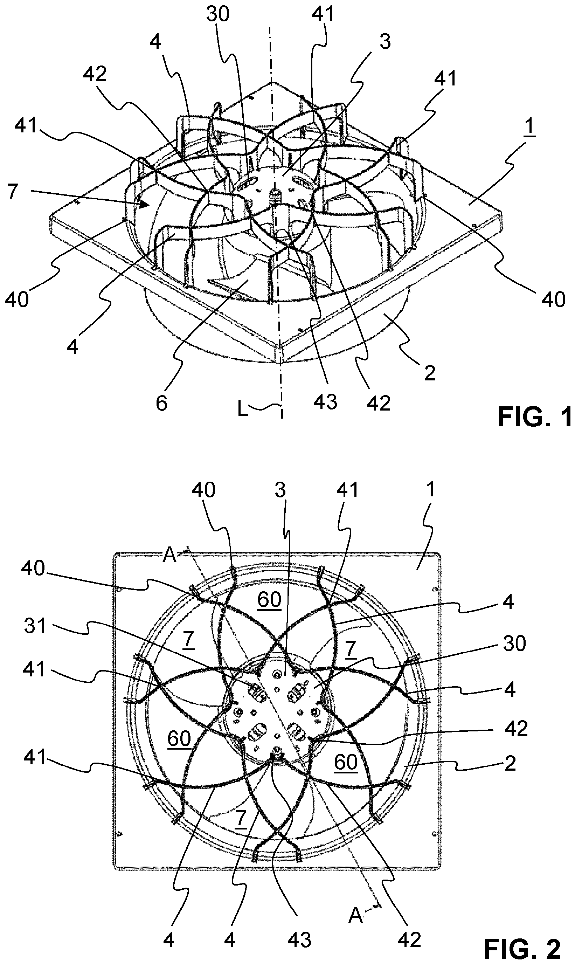

In den Figuren 1 bis 4 ist eine bevorzugte Ausführungsform eines Ventilators mit einem erfindungsgemässen Motorträger 1, 3, 4, 7, einem Motor 5, Laufrad 6 und Düse 2 dargestellt. Der Motorträger weist einen äusseren Trägerteil 1, einen inneren Trägerteil 3 und Streben 4 auf und bildet eine Luftdurchströmungsöffnung 7 aus. Der Ventilator ist vorzugsweise ein Axialventilator.

Der äussere Trägerteil 1 dient üblicherweise als Wandring zur Montage des Ventilators in oder an einem Gehäuse oder in bzw. an einer Gebäudewand. Der äussere Trägerteil 1 weist eine Ausnehmung auf, die eine Luftdurchströmungsöffnung 7 definiert. Die Ausnehmung ist vorzugsweise zentrisch angeordnet.

Die Luftdurchströmungsöffnung 7 weist vorzugsweise eine kreisrunde Form auf. Der äussere Trägerteil 1 weist in diesem Beispiel eine quadratische Grundform auf. Andere Grundformen sind möglich, beispielsweise rund, oval oder rechteckig.

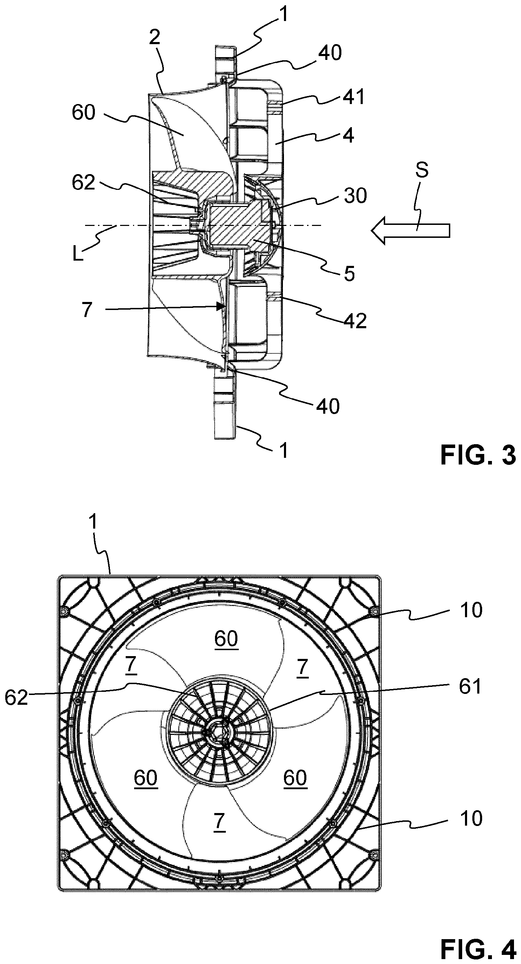

Die Düse 2 des Ventilators ist am äusseren Trägerteil 1 des Motorträgers befestigt, vorzugsweise an ihrem Umfang. Dies ist in Figur 3 erkennbar. Vorzugsweise verjüngt sie sich in Strömungsrichtung, d.h. von Motorträger und somit vom ersten Trägerteil 1 weg.

Der innere Trägerteil 3 und die Luftdurchströmungsöffnung sind vorzugsweise koaxial angeordnet. Vorzugsweise sind auch der innere Trägerteil und der äussere Trägerteil 1 koaxial angeordnet.

Der innere Trägerteil 3 ist zur Aufnahme, vorzugsweise zur Lagerung des Motors 5, vorzugsweise eines Elektromotors, ausgebildet. In diesem Beispiel weist der innere Trägerteil 3 ein Motorgehäuse 30 in Form einer Kuppel auf mit einer dem Luftstrom zugewandten gewölbten Oberfläche. Dies ist in Figur 3 gut erkennbar. Die Strömungsrichtung S ist in dieser Figur mit einem Pfeil dargestellt. Das Motorgehäuse30 weist Durchgangsöffnungen 31 zur Befestigung des Motors 5 mittels Schrauben im Gehäuse 30 und/oder zur Durchführung von Strom- und/oder Sensorkabeln auf.

Das Laufrad 6, auch Flügelrad oder Propeller genannt, ist vorzugsweise am Motor 5 befestigt. Es lässt sich mittels des Motors 5 um die Achse L des Ventilators und somit des Motorträgers drehen. In diesem Beispiel weist das Laufrad 6 drei Schaufeln 60 auf, wie in Figur 4 gut erkennbar ist. In Figur 2 ist die Schaufel 60 unten rechts im Bild nicht vollständig gezeichnet.

Die Schaufeln 60 werden auch Blätter oder Flügel genannt. Die Schaufel 60 sind an einem inneren Ring 61 angeordnet. Radialstreben 62 versteifen den inneren Ring 61 und somit das Laufrad 6. Dies ist in den Figuren 3 und 4 gut erkennbar. Die Anzahl und Form der Schaufeln 60 sowie die übrigen Komponenten des Laufrads 6 sind hier lediglich beispielhaft. Das Laufrad 6 kann auch anders ausgebildet sein. Vorzugsweise ist es ein Laufrad 6 eines Axialventilators. Je nach Ausführungsform enden die Schaufeln 60 frei oder sie gehen in einen gemeinsamen Ring über, der Teil der Düse ist. In diesem Fall dreht die Düse mit dem Laufrad mit. In anderen Ausführungsformen, wie hier dargestellt, ist die Düse stationär und dreht sich, wie auch der Motorträger, nicht mit.

Der Motorträger umfasst die Streben 4. Sie dienen zur Verbindung des inneren Trägerteils 3 mit dem äusseren Trägerteil 1. Sie weisen je ein äusseres erste Ende 40 und je ein inneres zweite Ende 43 auf. Das innere zweite Ende 43 ist mit dem inneren Trägerteil 3 verbunden, das äussere erste Ende 40 mit dem äusseren Trägerteil 1. Die Streben 4 verlaufen nicht radial, sondern sie sind in einer Ebene senkrecht zur Achse L gebogen ausgebildet, beispielsweise sichelförmig. Wie in Figur 2 gut erkennbar ist, weist jede Strebe 4 lediglich an ihren Enden 43, 40 einen Knick bzw. eine Stufe auf und sie ist dazwischen kontinuierlich gebogen.

Wie ebenfalls in Figur 2 erkennbar ist, sind zwei Typen von Streben 4 vorhanden. Die Streben 4 eines ersten Typs sind im Uhrzeigersinn gebogen, Streben 4 eines zweiten Typs sind in Gegenuhrzeigersinn gebogen. Jede Strebe des ersten Typs weist als direkte Nachbarn Streben des zweiten Typs und umgekehrt auf. Streben des ersten Typs und Streben des zweiten Typs sind somit abwechseln nacheinander umfänglich am äusseren und am inneren Trägerteil 1, 3 angeordnet.

Wie in den Figuren 1 und 3 gut erkennbar ist, stehen die Streben dem äusseren Trägerteil 1 in axialer Richtung vor. Sie bilden eine Oberfläche aus, die axial versetzt zur Oberfläche des äusseren Trägerteils 3 senkrecht zur Achse L verläuft. Sie weisen einen axialen ersten Schenkel auf, der gestuft oder in einem einzigen rechten oder annähernd rechten Winkel in einen senkrecht zur L verlaufende zweite Schenkel übergeht. Der axiale erste Schenkel bildet das äussere Ende 40 aus. Der axiale zweite Schenkel ist direkt mit dem inneren Gehäuseteil 3 verbunden oder er geht, wie in den Figuren 1 und 3 erkennbar ist, in einen axialen dritten Schenkel über, der am inneren Gehäuseteil 3 endet.

Vorzugsweise sind alle Streben 4 gleich ausgebildet, wobei sie sich lediglich in der Ausrichtung ihrer Biegung unterscheiden.

Die Streben 4 kreuzen sich mit mindestens einem, hier mit zwei anderen Streben 4. Dies ist in den Figuren 1 und 2 erkennbar. Vorzugsweise kreuzt sich jede Strebe 4 mit einer Strebe 4 des anderen Typs. In diesem Beispiel kreuzt sich jede Strebe 4 mit je zwei anderen Streben 4, wobei jede dieser zwei anderen Streben 4 vom anderen Typ ist. Eine erste Kreuzung 41 ist vorzugsweise benachbart zum äusseren Trägerteil 1, eine zweite Kreuzung 42 ist vorzugsweise benachbart zum inneren Trägerteil 1.

Je eine erste Strebe 4 des ersten Typs bildet mit je einer zweiten Strebe 4 des zweiten Typs ein Paar, indem die zweiten Enden 43 dieser zwei Streben 4 aneinander angrenzen. Die erste und die zweite Strebe 4 bilden eine V-Form mit gebogenen Schenkeln.

Das erste Ende 40 der ersten Strebe 4 liegt benachbart, jedoch beabstandet zum ersten Ende 40 einer dritten Strebe 4. Das erste Ende der zweiten Strebe liegt benachbart, jedoch beabstandet zum ersten Ende einer vierten Strebe. Die dritte und vierte Strebe 4 wird von der ersten bzw. von der zweiten Strebe 4 gekreuzt.

Die dritte bzw. vierte Strebe 4 ist ein anderer Typ als die erste bzw. zweite Strebe 4. Der Abstand zwischen den ersten Enden 40 der ersten und dritten Strebe 4 ist kleiner als der Abstand zum jeweils nächsten ersten Ende 40 einer weiteren Strebe 4.

Vorzugsweise sind alle Streben, bis auf ihre Biegerichtung, identisch ausgebildet. Ihre Breite parallel zur Achse L und zur Strömungsrichtung ist vorzugsweise um ein Vielfaches grösser als ihre Breite senkrecht dazu.

In dieser Ausführungsform sind sieben Paare und somit vierzehn Streben 4 vorhanden. Dies ermöglicht eine optimale Verteilung zur Erreichung einer hohen Steifigkeit und einer minimalen Einschränkung des freien Durchflussquerschnitts. Es lässt sich jedoch auch eine andere Anzahl Streben verwenden, die gebogen sind und sich mindestens einmal kreuzen.

Die Streben 4 sind gemeinsam einteilig ausgebildet. Vorzugsweise ist der gesamte Motorträger einteilig ausgebildet. Er besteht vorzugsweise aus einem Kunststoff.

Der erfindungsgemässe Motorträger weist eine hohe Torsionssteifigkeit bei maximiertem Durchflussquerschnitt auf.

### BEZUGSZEICHENLISTE

- 1: äusserer Trägerteil
- 10: Rippe

- 2: Düse

- 3: innerer Trägerteil
- 30: Motorgehäuse
- 31: Durchgangsöffnungen

- 4: Strebe
- 40: äusseres Ende
- 41: erste Kreuzung
- 42: zweite Kreuzung
- 43: inneres Ende

- 5: Motor

- 6: Laufrad
- 60: Schaufel
- 61: Ring
- 62: Radialstrebe

- 7: Luftdurchströmungsöffnung

- L: Achse
- S: Strömungsrichtung

## Patentansprüche

1. Motorträger für einen Ventilator, aufweisend
einen äusseren Trägerteil (1),
einen inneren Trägerteil (3) zur Halterung eines Motors (5),
Streben (4), die den äusseren Trägerteil (1) mit dem inneren Trägerteil (3) verbinden, und eine Luftdurchströmungsöffnung (7), die eine Achse (L) definiert,
wobei der innere Trägerteil (3) in der Luftdurchströmungsöffnung (7) angeordnet ist,
wobei die Streben (4) die Luftdurchströmungsöffnung (7) unterteilen,
wobei je ein erstes Ende (40) der Streben (4) am äusseren Trägerteil (1) und je ein zweites Ende (43) der Streben (4) am inneren Trägerteil (3) angeordnet ist, und
wobei die Streben (4) in einer Ebene senkrecht zur Achse (L) gebogen ausgebildet sind,
**dadurch gekennzeichnet,**
**dass** sich die Streben (4) kreuzen.

2. Motorträger nach Anspruch 1, wobei sich Streben (4) mit mindestens zwei, vorzugsweise mit genau zwei, anderen Streben (4) kreuzen.

3. Motorträger nach einem der Ansprüche 1 oder 2, wobei ein erster Teil der Streben (4) in eine erste Richtung gebogen ist und ein zweiter Teil der Streben (4) in eine der ersten Richtung entgegengesetzten Richtung gebogen ist.

4. Motorträger nach Anspruch 3, wobei die in der ersten Richtung gebogenen Streben (4) und die in der zweiten Richtung gebogenen Streben (4) einander in der Reihenfolge abwechselnd am äusseren Tragerteil (1) und am inneren Trägerteil (3) angeordnet sind.

5. Motorträger nach einem der Ansprüche 3 oder 4, wobei eine in der ersten Richtung gebogene Strebe (4) mindestens eine in der zweiten Richtung gebogene Strebe (4) kreuzt.

6. Motorträger nach einem der Ansprüche 3 bis 5, wobei eine in der ersten Richtung gebogene Strebe (4) mindestens zwei, vorzugsweise genau zwei, in der zweiten Richtung gebogene Streben (4) kreuzt.

7. Motorträger nach einem der Ansprüche 3 bis 6, wobei je eine in die erste Richtung gebogene Strebe (4) mit je einer in die zweite Richtung gebogene Strebe (4) ein Paar bildet, wobei diese zwei Streben (4) mit ihren zweiten Enden (43) benachbart zueinander oder aneinander angrenzend am inneren Trägerteil (3) angeordnet sind.

8. Motorträger nach Anspruch 7, wobei diese zwei Streben (4) gemeinsam eine V-Form mit nach aussen gebogenen Schenkeln bilden.

9. Motorträger nach Anspruch 8, wobei mehrere identische V-Formen bildende Paare der Streben (4) derart um den inneren Trägerteil (3) angeordnet sind, dass sie sich benachbart zum äusseren Trägerteil (1) überschneiden und eine blumenähnliche Form bilden.

10. Motorträger einem der Ansprüche 1 bis 9, wobei die ersten Enden (40) der Streben (4) in einem Abstand zueinander am äusseren Trägerteil (1) angeordnet sind.

11. Motorträger nach Anspruch 10, wobei der Abstand zwischen dem ersten Ende jeder Strebe (40) zum ersten Ende (40) der auf einer ersten Seite benachbarten Strebe (4) kleiner ist als der Abstand zwischen dem ersten Ende (40) dieser Strebe (4) zum ersten Ende (40) der auf einer zweiten Seite benachbarten Strebe (4).

12. Motorträger nach einem der Ansprüche 1 bis 11, wobei die Streben (4) in Richtung der Achse (L) breiter ausgebildet sind als senkrecht zur Achse (L).

13. Motorträger nach einem der Ansprüche 1 bis 12, wobei die Streben (4) gemeinsam einteilig ausgebildet sind.

14. Motorträger nach einem der Ansprüche 1 bis 13, wobei der innere Trägerteil (3) ein kuppelförmiges Motorgehäuse (30) aufweist, an dem die zweiten Enden (43) der Streben (4) angeordnet sind und das zur mindestens teilweisen Aufnahme des Motors (5) ausgebildet ist.

15. Motorträger nach einem der Ansprüche 1 bis 14, wobei der äussere Trägerteil (1), der innere Trägerteil (3) und die Streben (4) gemeinsam einteilig ausgebildet sind.
